# EUROPEAN PATENT APPLICATION

(11) **EP 2 924 791 A1**
(43) Date of publication of application: **30.09.2015**
(21) Application number: 15160603.5
(22) Date of filing: 24.03.2015
(51) Int. Cl.: H01M 8/04, H01M 8/10

(54) **FUEL CELL SYSTEM AND WATER CONTENT CONTROL METHOD OF FUEL CELL**

(30) Priority: 25.03.2014 JP 2014061298
(71) Applicant: Toyota Jidosha Kabushiki Kaisha, Toyota-shi, Aichi-ken 471-8571 (JP)
(72) Inventor: TEJIMA, Go, Aichi-ken, 471-8571 (JP)
(74) Representative: Smith, Samuel Leonard

(57) **Abstract**

A fuel cell system configured to control a water content of a fuel cell includes: a fuel cell including an electrolyte membrane, an anode formed on one surface of the electrolyte membrane, and a cathode formed on the other surface of the electrolyte membrane; an estimation portion configured to estimate a water content existing in an anode side; and a controlling portion configured such that, when the water content in the anode side, estimated by the estimation portion, is a threshold or more, the controlling portion maintains, at a predetermined rate, a flow rate of an anode gas flowing in the anode side, and controls a flow rate of a cathode gas flowing in a cathode side to be less than a predetermined rate. The estimation of the water content may be based on a voltage fluctuation of the fuel cell.

## Description

### BACKGROUND OF THE INVENTION

### 1. Field of the Invention

The present invention relates to a fuel cell system and a water content control method of a fuel cell.

### 2. Description of Related Art

In order to efficiently generate electric power, it is desirable to adjust an amount of water included in a cell of a battery cell to an appropriate amount. In order to adjust the amount of water included in the cell to the appropriate amount, such a technique is disclosed that an amount of water in a reactant gas passage in a surface of each single cell and an amount of water included in an electrolyte membrane are estimated in consideration of movement of water to be performed between an anode electrode and a cathode electrode via the electrolyte membrane, and if the estimated amounts of water exceed a predetermined value, a scavenging process is performed on a fuel cell, and then, a current to be taken out from the fuel cell is limited (International Publication No. 2010/73383).

However, generally, a gas flow rate in an anode side is smaller than a gas flow rate in a cathode side. Accordingly, the technique of International Publication No. 2010/73383 has such a problem that, in a case where water is once accumulated in a gas passage in the anode side, removal of the water thus accumulated becomes difficult. When the water is accumulated in the gas passage in the anode side, an anode gas is hard to flow therethrough, which causes a decrease in output of the fuel cell. In view of this, a technique that can restrain water from being accumulated in the gas passage in the anode side is desired.

### SUMMARY OF THE INVENTION

The present invention provides a fuel cell system and a water content control method of a fuel cell.

One aspect of the present invention provides a fuel cell system. The fuel cell system includes: a fuel cell including an electrolyte membrane, an anode formed on one surface of the electrolyte membrane, and a cathode formed on the other surface of the electrolyte membrane; an estimation portion configured to estimate water clogging in an anode side; and a controlling portion configured such that, when the estimation portion estimates that the anode side is in a water clogging state, the controlling portion maintains, at a predetermined rate, a flow rate of an anode gas flowing in the anode side, and controls a flow rate of a cathode gas flowing in the cathode side to be less than a predetermined rate. In the fuel cell system according to the above aspect, when the water clogging in the anode side is estimated, the gas flow rate in the cathode side is reduced, so that an amount of water to move from the anode side to the cathode side can be made larger than an amount of water to move from the cathode side to the anode side. This makes it possible to restrain water from being accumulated in a gas passage in the anode side.

In the above embodiment, the water clogging may be estimated based on a water content existing in the anode side. A case where the estimation portion estimates that the anode side is in a water clogging state may indicate a case where the water content of the anode side is a threshold or more.

In the above aspect, the fuel cell system may include a stack configured such that a plurality of fuel cells is laminated, and the estimation portion may estimate the water content of the anode side based on a water content of a fuel cell provided in an end part of the stack such that its anode faces an outside of the stack of the fuel cells. The water content of the end part of the stack is easy to increase as compared with the other portions. Further, in the fuel cell of which the anode faces the outside of the stack, a temperature of the anode is easy to decrease as compared with a temperature of a cathode thereof. In view of this, by estimating the water content of the fuel cell of which the anode faces the outside of the stack, as the water content of the anode side, it is possible to easily estimate the water content of the anode side.

In the above aspect, the estimation portion may estimate the water content of the anode side based on a voltage fluctuation of the fuel cell. In such a fuel cell system, it is possible to estimate the water content of the anode side based on the voltage fluctuation of the fuel cell.

In the above aspect of the present invention, the present invention is achievable in various forms other than the fuel cell system described above. For example, the present invention is achievable in a form of a water content control method of a fuel cell, for example.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view illustrating a configuration of a fuel cell system according to one embodiment of the present invention;
FIG. 2 is a flowchart illustrating a water content control process of a fuel cell in the fuel cell system;
FIG. 3 is an explanatory view schematically illustrating movement of water between an anode An and a cathode Cn in a case where the water content control process is not performed;
FIG. 4 is an explanatory view schematically illustrating movement of water between the anode An and the cathode Cn in a case where the water content control process is performed; and
FIG. 5 is a flowchart illustrating a water content control process in a second embodiment.

### DETAILED DESCRIPTION OF EMBODIMENTS

### A. First Embodiment:

### A1. Configuration of Fuel Cell System:

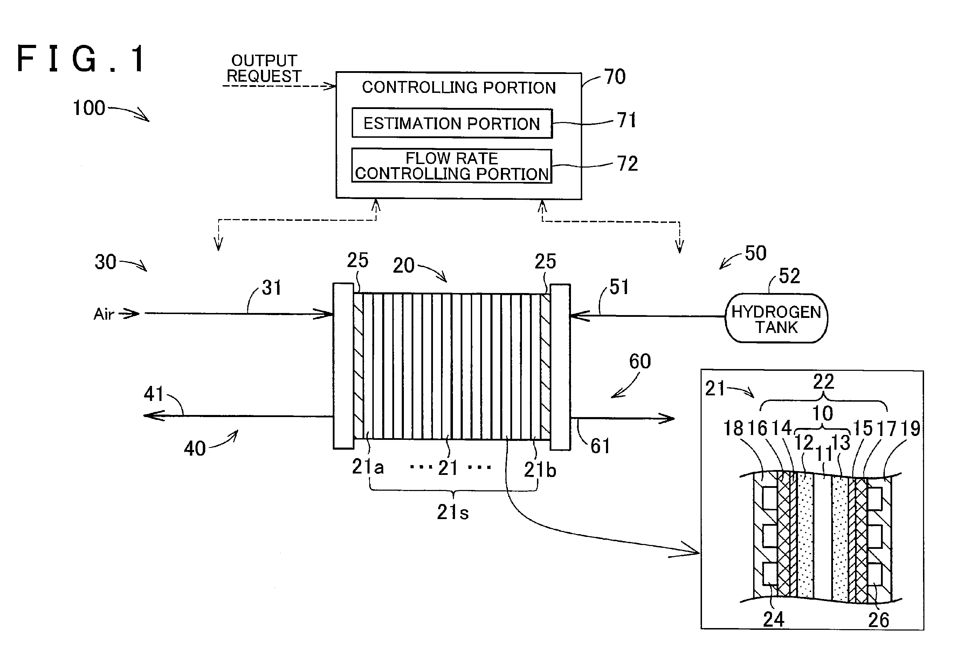

FIG. 1 is a schematic view illustrating a configuration of a fuel cell system 100 according to one embodiment of the present invention. The fuel cell system 100 is provided in an electric vehicle, for example, and outputs electric power as a power source of the vehicle in response to a request from a driver.

The fuel cell system 100 includes a fuel cell 20, a cathode gas supply system 30, a cathode gas exhaust system 40, an anode gas supply system 50, an anode gas exhaust system 60, and a controlling portion 70.

The fuel cell 20 is a solid polymer fuel cell configured to generate electric power upon receipt of hydrogen (an anode gas) and air (a cathode gas) as reactant gases. The fuel cell 20 is constituted by a stack 21s configured such that a plurality of cells 21 is laminated. Cells 21a, 21b provided in end parts of the stack 21s make contact with respective end plates 25. The cell 21 a is a cell of which an anode faces an outer side of the stack 21s, and the cell 21b is a cell of which an anode faces an inner side of the stack 21s.

Each of the cells 21 includes a membrane-electrode & gas diffusion layer assembly (MEGA) 22 including a membrane electrode assembly (MEA) 10, an anode-side gas diffusion layer 16 joined to one surface of the MEA 10 via a micro porous layer (MPL) 14, and a cathode-side gas diffusion layer 17 joined to the other surface of the MEA 10 via a MPL 15. The anode-side gas diffusion layer 16 and the cathode-side gas diffusion layer 17 of the MEGA 22 are adjacent to an anode-side separator 18 and a cathode-side separator 19, respectively. An anode gas passage 24 is formed between the anode-side gas diffusion layer 16 and the anode-side separator 18. A cathode gas passage 26 is formed between the cathode-side gas diffusion layer 17 and the cathode-side separator 19.

The MEA 10 includes an electrolyte membrane 11, and an anode-side catalytic layer 12 and a cathode-side catalytic layer 13 formed on both surfaces of the electrolyte membrane 11, respectively. The electrolyte membrane 11 is a solid polymer thin film exhibiting an excellent proton conductivity in a wet condition. The electrolyte membrane 11 is constituted by an ion exchange membrane of fluorinated resin such as Nafion (registered trademark), for example. The anode-side catalytic layer 12 and the cathode-side catalytic layer 13 each include a catalyst that promotes a chemical reaction between hydrogen and oxygen, and carbon particles that carry the catalyst.

The MPLs 14, 15 have micropores formed by use of water-repellent resin such as polytetrafluoroethylene (PTFE) and a conductive material such as carbon black. The MPLs 14, 15 maintain a wet condition in the MEA 10 and restrain such a situation that, during power generation of the fuel cell 20, pores of the anode-side catalytic layer 12 and the cathode-side catalytic layer 13, and pores of the anode-side gas diffusion layer 16 and the cathode-side gas diffusion layer 17 are closed by water generated due to a chemical reaction.

The anode-side gas diffusion layer 16 and the cathode-side gas diffusion layer 17 are constituted by a porous base material having conductivity and gas diffusivity, such as a carbon fiber base material, a graphite fiber base material, and foam metal.

The anode-side separator 18 and the cathode-side separator 19 are plate-shaped members having conductivity and gas impermeability, and are each constituted by a metal plate, for example.

The anode gas passage 24 is connected to the anode gas supply system 50 and the anode gas exhaust system 60. The cathode gas passage 26 is connected to the cathode gas supply system 30 and the cathode gas exhaust system 40. A cathode gas (e.g., air) is supplied to the cell 21 from the cathode gas supply system 30 via a pipe 31, and an anode gas (e.g., hydrogen) in a tank 52 is supplied from the anode gas supply system 50 via a pipe 51. Further, gases that have been reacted in the plurality of cells 21 and gases that have not been used in the reaction are exhausted from the cathode gas exhaust system 40 and the anode gas exhaust system 60 via pipes 41, 61.

Note that, in the present embodiment, an area including the anode-side catalytic layer 12, the MPL 14, the anode-side gas diffusion layer 16, the anode-side separator 18, and the anode gas passage 24 is referred to as an "anode side" relative to the electrolyte membrane 11, and an area including the cathode-side catalytic layer 13, the MPL 15, the cathode-side gas diffusion layer 17, the cathode-side separator 19, and the cathode gas passage 26 is referred to as a "cathode side" relative to the electrolyte membrane 11. When power generation is performed in the fuel cell 20, water is generated in the cathode side due to an electrochemical reaction between hydrogen and oxygen.

The controlling portion 70 is configured as a computer including a CPU, a RAM, and a ROM. The CPU functions as an estimation portion 71 and a flow rate controlling portion 72 by loading a program stored in the ROM to the RAM and executing the program. The controlling portion 70 executes the after-mentioned water content control process at the time when power generation of the fuel cell 20 is finished or at the time when power generation of the fuel cell 20 is stopped (e.g., a gear of the vehicle provided with the fuel cell 20 is shifted to a parking range), for example. In the water content control process, the estimation portion 71 estimates an occurrence of water clogging in the anode gas passage 24. In the first embodiment, the estimation portion 71 estimates a water content (hereinafter referred to as the anode water content Wa) existing in the anode side of the fuel cell 20. Further, the estimation portion 71 estimates a water content (hereinafter referred to as the moved water content Wac) that has moved from the anode side to the cathode side. When the anode water content Wa thus estimated by the estimation portion 71 is a threshold Ta or more, the flow rate controlling portion 72 maintains an anode gas flow rate at an anode gas flow rate for normal power generation of the fuel cell and controls a cathode gas flow rate to be less than a cathode gas flow rate for normal power generation of the fuel cell. The ROM of the controlling portion 70 stores therein various maps used for estimation and the like of the anode water content Wa and the moved water content Wac.

### A2. Water Content Control Process:

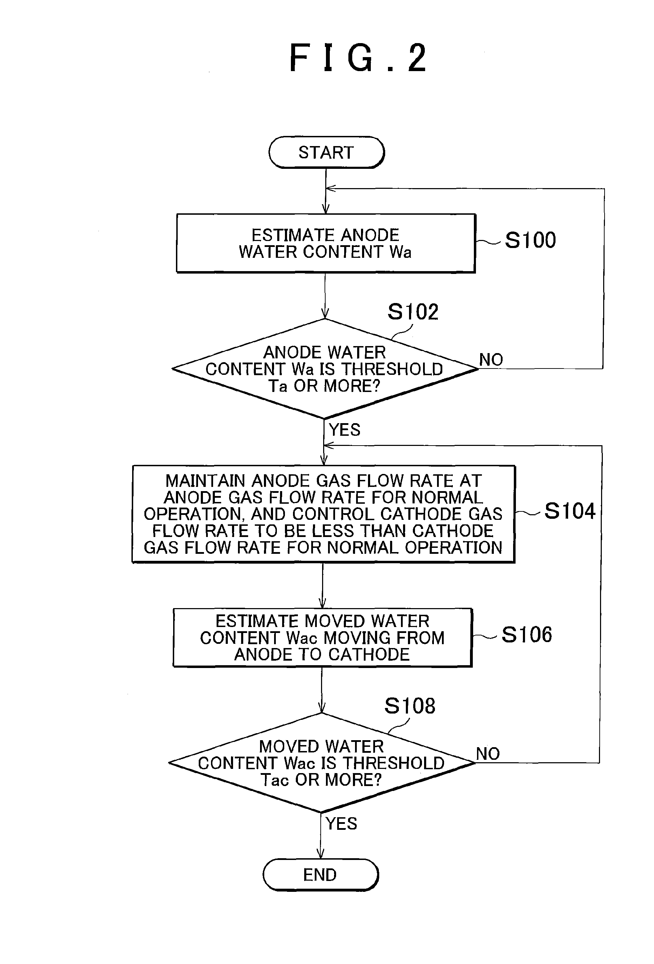

FIG. 2 is a flowchart illustrating a water content control process of the fuel cell in the fuel cell system 100. When the water content control process is started, the estimation portion 71 of the controlling portion 70 estimates an anode water content Wa of each cell 21 (step S100). The estimation of the anode water content Wa can be performed by well-known methods as described in Japanese Patent Application Publication No. 2007-52936 (JP 2007-52936 A), Japanese Patent Application Publication No. 2007-52937 (JP 2007-52937 A), and Japanese Patent Application Publication No. 2009-259418 (JP 2009-259418 A). More specifically, in step S100, the estimation portion 71 resets an accumulation value of the anode water content Wa once. Then, based on various parameters such as a water content to be generated in each cell 21, a water content to flow into the each cell 21, a water content to be discharged from the each cell 21, a gas flow rate, and the like, the estimation portion 71 estimates an anode water content Wa accumulated in the each cell 21. Note that the estimation portion 71 may estimate the anode water content Wa by a well-known low frequency impedance method.

Then, the controlling portion 70 determines whether or not the anode water content Wa of the each cell 21, estimated by the estimation portion 71, is a threshold Ta of an anode water content Wa or more stored in the ROM in advance (step S102). When the anode water content Wa thus estimated in any of the cells 21 is less than the threshold Ta (step S102: NO), the estimation portion 71 continues estimating the anode water content Wa (step S100). On the other hand, when the anode water content Wa estimated in the cell 21 is the threshold Ta or more (step S102: YES), the estimation portion 71 estimates that water clogging occurs in the anode gas passage 24. Then, the flow rate controlling portion 72 maintains an anode gas flow rate at an anode gas flow rate for normal power generation of the fuel cell 20, and controls a cathode gas flow rate to be less than a cathode gas flow rate for normal power generation of the fuel cell 20 (step S104). In step S104, the flow rate controlling portion 72 reduces the cathode gas flow rate by 20% to 40% from the cathode gas flow rate for normal power generation, for example.

Subsequently, the estimation portion 71 of the controlling portion 70 estimates a water content (a moved water content Wac) that has moved from the anode side to the cathode side (step S106). In step S106, the estimation portion 71 measures a current value in each cell 21, for example, and the estimation portion 71 estimates the moved water content Wac that has moved from the anode side to the cathode side, based on the current value thus measured.

Then, the controlling portion 70 determines whether or not the moved water content Wac thus estimated by the estimation portion 71 is a threshold Tac or more stored in the ROM in advance (step S108). The threshold Tac is a value at which the anode water content Wa is less than the threshold Ta. When the moved water content Wac thus estimated is less than the threshold Tac (step S108: NO), the flow rate controlling portion 72 maintains the anode gas flow rate at the anode gas flow rate for normal power generation of the fuel cell 20, and controls the cathode gas flow rate to be less than the cathode gas flow rate for normal power generation of the fuel cell 20 (step S104). Further, the estimation portion 71 continues estimating the moved water content Wac (step S106). On the other hand, when the moved water content Wac thus estimated is the threshold Tac or more (step S108: YES), the controlling portion 70 finishes the water content control process.

### A3. Effects:

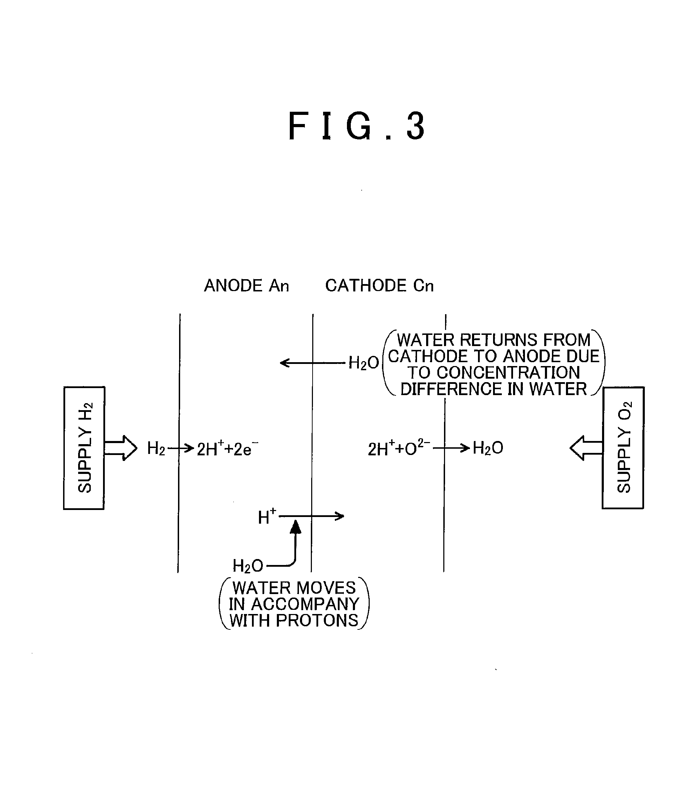

The following describes effects obtained by performing the water content control process. FIG. 3 is an explanatory view schematically illustrating movement of water between an anode An and a cathode Cn in a case where the water content control process is not performed. In a case where the water content control process is not performed, protons are generated in the anode An by a reaction expressed by the following Formula (1), as illustrated in FIG. 3. Further, water is generated in the cathode Cn by a reaction expressed by the following Formula (2).

H₂ → 2H⁺ + 2e⁻ ... Formula (1)

2H⁺ + O₂ → 2H₂O ... Formula (2)

At this time, water moves from the anode An to the cathode Cn in accompany with the protons generated by the reaction expressed by Formula (1). Note that the water thus moving partially returns to the anode An from the cathode Cn due to a concentration difference in water between the anode An and the cathode Cn.

In general, the anode gas flow rate is smaller than the cathode gas flow rate. Accordingly, once water is accumulated in the anode side, the anode gas is hard to be supplied to the anode An. This restrains progress of the reaction expressed by Formula (1), so that the water is hard to move from the anode An to the cathode Cn in accompany with the protons, thereby making it difficult to remove the water accumulated in the anode side. In such a case, an output of the fuel cell might be decreased.

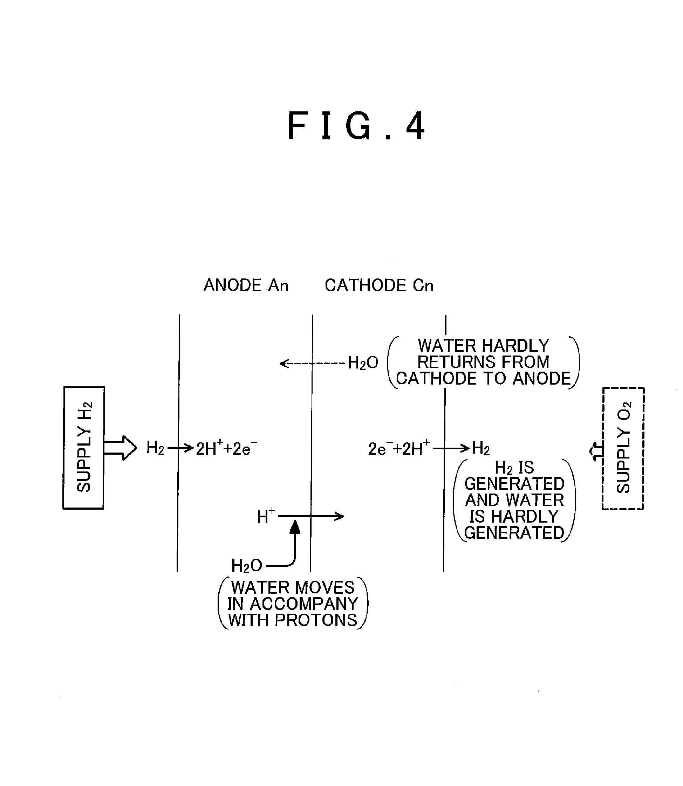

FIG. 4 is an explanatory view schematically illustrating movement of water between the anode An and the cathode Cn in a case where the water content control process is performed. In the water content control process, when the anode water content Wa is the threshold Ta or more, the anode gas flow rate is maintained at the anode gas flow rate for normal power generation and the cathode gas flow rate is controlled to be less than the cathode gas flow rate for normal power generation. This restrains progress of the reaction expressed by Formula (2), so that water to be generated in the cathode Cn is decreased. Further, since the water to be generated in the cathode Cn is decreased, movement of the water from the cathode Cn to the anode An due to a concentration difference is decreased. In the meantime, water moves from the anode An to the cathode Cn in accompany with the protons generated by the reaction expressed by Formula (1). Thus, the movement of the water from the anode-An side to the cathode-Cn side is promoted, so that the water content in the anode-An side can be decreased. Thus, according to the present embodiment, it is possible to restrain water from being accumulated in the anode gas passage 24, thereby making it possible to restrain a decrease in output of the fuel cell.

### B. Second Embodiment:

### B1. Configuration of Fuel Cell System:

In the above embodiment, the estimation portion 71 estimates the anode water content Wa accumulated in each cell 21 based on various parameters such as a water content to be generated in the each cell 21, a water content to flow into the each cell 21, a water content to be discharged from the each cell 21, a gas flow rate, and the like. In contrast, in the present embodiment, an estimation portion 71 records a voltage fluctuation (hereinafter also referred to as a voltage variation Vdev) in each cell 21 within a predetermined time (e.g., ten seconds) at a predetermined current (e.g., 0.5 to 1.5 A/cm²). The estimation portion 71 estimates water clogging in an anode gas passage 24 based on the voltage fluctuation. The reason why water clogging can be estimated based on the voltage fluctuation of the each cell 21 is as follows: when water is accumulated in the anode gas passage 24, gas does not flow sufficiently therein, thereby resulting in that shortage of the gas occurs and a voltage is decreased. Note that the other configurations of the fuel cell system 100 in the present embodiment are the same as those in the first embodiment, so descriptions thereof are omitted.

### B2. Water Content Control Process:

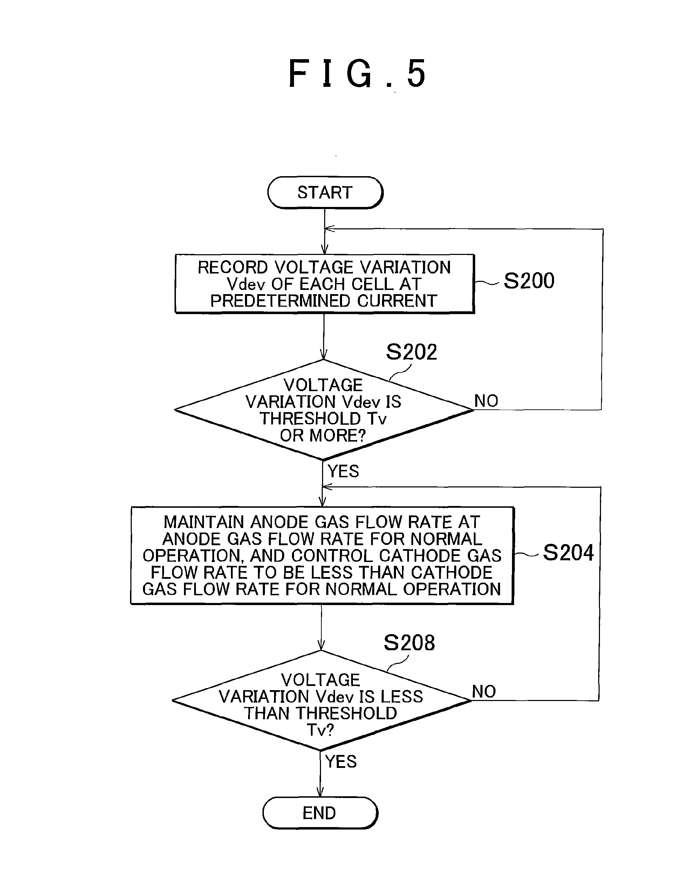

FIG. 5 is a flowchart illustrating a water content control process in the second embodiment. When the water content control process is started, the estimation portion 71 of the controlling portion 70 records a voltage variation Vdev in each cell 21 at a predetermined current (step S200).

Then, the controlling portion 70 determines whether or not the voltage variation Vdev is a threshold Tv or more stored in the ROM in advance (step S202). When the voltage variation Vdev in any of the cells 21 is less than the threshold Ta (step S202: NO), the estimation portion 71 continues recording the voltage variation Vdev (step S200). On the other hand, when the voltage variation Vdev is the threshold Ta or more (step S202: YES), the estimation portion 71 estimates that water clogging occurs in the anode gas passage 24. Accordingly, the flow rate controlling portion 72 maintains an anode gas flow rate at an anode gas flow rate for normal power generation of the fuel cell 20, and controls a cathode gas flow rate to be less than a cathode gas flow rate for normal power generation of the fuel cell 20 (step S204). In step S204, the flow rate controlling portion 72 reduces the cathode gas flow rate by 20% to 40% from the cathode gas flow rate for normal power generation, for example.

Then, the controlling portion 70 determines whether or not the voltage variation Vdev measured by the estimation portion 71 is less than the threshold Tv (step S208). When the voltage variation Vdev is not less than the threshold Ta (step S208: NO), the flow rate controlling portion 72 continues maintaining the anode gas flow rate at the anode gas flow rate for normal power generation of the fuel cell 20, and continues controlling the cathode gas flow rate to be less than the cathode gas flow rate for normal power generation of the fuel cell 20 (step S204). In the meantime, when the voltage variation Vdev is less than the threshold Tv (step S208: YES), the controlling portion 70 finishes the water content control process.

### B3. Effects:

In the present embodiment, the estimation portion 71 measures a voltage variation Vdev. When the voltage variation Vdev is the threshold Tv or more, the anode gas flow rate is maintained at the anode gas flow rate for normal power generation and the cathode gas flow rate is controlled to be less than the cathode gas flow rate for normal power generation. Thus, similarly to the first embodiment, it is possible to restrain water from being accumulated in the anode gas passage 24, thereby making it possible to restrain a decrease in output of the fuel cell.

Note that, in the above second embodiment, the ROM of the controlling portion 70 may store therein a map of a relationship between the voltage variation Vdev and the anode water content Wa, so that the estimation portion 71 may estimate an anode water content Wa based on the map so as to estimate water clogging in the anode gas passage 24 by comparing the anode water content Wa thus estimated with the threshold stored in the ROM in advance.

### C. Modifications:

### C1. First Modification:

In the first embodiment, the estimation portion 71 estimates the anode water content Wa of each cell 21. In this regard, the estimation portion 71 may not estimate anode water contents Wa of all the cells 21 in the stack 21s. For example, the estimation portion 71 may estimate anode water contents Wa only about the cells 21a, 21b provided in the end parts of the stack 21s, and a central cell of the stack 21s. Further, in the second embodiment, the estimation portion 71 estimates water clogging in the anode gas passage 24 by measuring the voltage variation Vdev of each cell 21. In this regard, the estimation portion 71 may not estimate voltage variations Vdev of all the cells 21 in the stack 21s. For example, the estimation portion 71 may estimate voltage variations Vdev only about the cells 21 a, 21 b provided in the end parts of the stack 21 s, and the central cell of the stack 21s, so as to estimate water clogging in the anode gas passage 24.

### C2. Second Modification:

In the first embodiment, when the anode water content Wa in any of the cells 21 is the threshold Ta or more, the estimation portion 71 determines that the anode water content Wa is the threshold Ta or more (FIG. 2, step S102: YES). In this regard, when an average value of values of the anode water contents Wa estimated for respective cells 21 exceeds the threshold Ta, the estimation portion 71 may determine that the anode water content Wa is the threshold Ta or more. Further, in the second embodiment, when the voltage variation Vdev in any of the cells 21 is the threshold Tv or more, the estimation portion 71 determines that the voltage variation Vdev is the threshold Tv or more (FIG. 5, step S202: YES). In this regard, when an average value of values of the voltage variations Vdev measured for respective cells 21 exceeds the threshold Ta, the estimation portion 71 may determine that the voltage variation Vdev is the threshold Tv or more.

### C3. Third Modification:

In the above embodiment, the threshold Ta for the anode water content Wa and the threshold Tv for the voltage variation Vdev may be set for each cell 21. For example, lower thresholds Ta, Tv may be set for the cell 21a of which the anode faces the outside of the stack 21s, as compared with the central cell of the stack and the cell 21b in the other end part of the stack. Redundant generated water and steam for gas moisturization are easy to be accumulated in the cells 21a, 21b provided in the end parts of the stack, as compared with the cells provided at the other positions including a center of the stack. Further, temperatures of the cells 21a, 21b provided in the end parts of the stack are lower than temperatures of the cells provided at the other positions in the stack 21s due to a temperature gradient, so that water is easy to be accumulated therein. Further, in a case where the anode faces the outside of the stack, water is further easy to be accumulated in the anode side. Accordingly, if the threshold Ta for the water content Wa and the threshold Tv for the voltage variation Vdev with respect to the cell 21a of which the anode faces the outside of the stack 21s are lowered, it is possible to further restrain water from being accumulated in the anode side in the fuel cell 20.

### C4. Fourth Modification:

In the first embodiment, the estimation portion 71 estimates the anode water content Wa accumulated in each cell 21 based on various parameters such as a water content to be generated in the each cell 21, a water content to flow into the each cell 21, a water content to be discharged from the each cell 21, a gas flow rate, and the like. In this regard, the estimation portion 71 may estimate, as the anode water content Wa, a water content of the cell 21 a of which the anode faces the outside of the stack, out of the cells 21a, 21b provided in the end parts of the stack 21s. In the cell 21a of which the anode faces the outside of the stack, a temperature of the anode is easy to decrease as compared with a temperature of the cathode. Accordingly, water is further easy to be accumulated in the anode side. On that account, the water content of the cell 21a can be estimated as the anode water content Wa. This configuration makes it easy for the estimation portion 71 to estimate the anode water content Wa. Further, similarly, in the second embodiment, the estimation portion 71 may estimate water clogging in the anode gas passage 24 based on the voltage variation Vdev of the cell 21a of which the anode faces the outside of the stack, out of the cells 21a, 21b provided in the end parts of the stack 21s.

### C5. Fifth Modification:

In the first embodiment, in a case where the estimated anode water content Wa is the threshold Ta or more, the flow rate controlling portion 72 reduces the cathode gas flow rate by 20% to 40% from the cathode gas flow rate for normal power generation. Further, in the second embodiment, in a case where the voltage variation Vdev is the threshold Tv or more, the flow rate controlling portion 72 reduces the cathode gas flow rate by 20% to 40% from the cathode gas flow rate for normal power generation. In this regard, the flow rate controlling portion 72 may reduce the cathode gas flow rate by 20% to 40% or more. For example, the flow rate controlling portion 72 may stop the supply of the cathode gas to the fuel cell 20.

### C6. Sixth Modification:

The fuel cell system 100 may perform both the water content control process in the first embodiment and the water content control process in the second embodiment. For example, the estimation portion 71 of the controlling portion 70 performs estimation of the anode water content Wa and measurement of the voltage variation Vdev. In a case where at least either one of the anode water content Wa and the voltage variation Vdev is the threshold Ta, Tv or more, the flow rate controlling portion 72 may maintain the anode gas flow rate at the anode gas flow rate for normal power generation of the fuel cell 20, and control the cathode gas flow rate to be less than the cathode gas flow rate for normal power generation of the fuel cell 20.

### C7. Seventh Modification:

In the first embodiment, the estimation portion 71 estimates, as the anode water content Wa, a water content existing in the area including the anode-side catalytic layer 12, the MPL 14, the anode-side gas diffusion layer 16, the anode-side separator 18, and the anode gas passage 24, relative to the electrolyte membrane 11. In this regard, the estimation portion 71 may estimate, as the anode water content Wa, a water content existing in at least any of the anode-side catalytic layer 12, the MPL 14, the anode-side gas diffusion layer 16, the anode-side separator 18, and the anode gas passage 24.

### C8. Eighth Modification:

In the above embodiments, the controlling portion 70 performs the water content control process on the stacking fuel cell 20 including a plurality of cell 21. In this regard, the controlling portion 70 may perform the water content control process on a fuel cell (the cell 21) that is not a stacking fuel cell.

### C9. Ninth Modification:

In the above embodiments, the controlling portion 70 may compare voltages of two different cells 21, and when a voltage difference therebetween is a predetermined value or more, the controlling portion 70 may estimate that water clogging occurs in the cell with a lower voltage.

## Claims

1. A fuel cell system **characterized by** comprising:
a fuel cell (20) including an electrolyte membrane (11), an anode (12) formed on one surface of the electrolyte membrane, and a cathode (13) formed on the other surface of the electrolyte membrane;
an estimation portion (71) configured to estimate water clogging in an anode side; and
a controlling portion (82) configured such that, when the estimation portion estimates that the anode side is in a water clogging state, the controlling portion maintains, at a predetermined rate, a flow rate of an anode gas flowing in the anode side, and controls a flow rate of a cathode gas flowing in a cathode side to be less than a predetermined rate.

2. The fuel cell system according to claim 1, **characterized in that**:
the water clogging is estimated based on a water content existing in the anode side; and
a case where the estimation portion estimates that the anode side is in a water clogging state indicates a case where the water content of the anode side is a threshold or more.

3. The fuel cell system according to claim 2, **characterized by** comprising:
a stack (21s) configured such that a plurality of fuel cells is laminated, wherein
the estimation portion estimates the water content of the anode side based on a water content of a fuel cell provided in an end part of the stack such that its anode faces an outside of the stack.

4. The fuel cell system according to claim 2 or 3, **characterized in that**
the estimation portion estimates the water content of the anode side based on a voltage fluctuation of the fuel cell.

5. A water content control method for controlling a water content of a fuel cell by a fuel cell system (100), the fuel cell (20) including an electrolyte membrane (11), an anode (12) formed on one surface of the electrolyte membrane, and a cathode (13) formed on the other surface of the electrolyte membrane, the water content control method **characterized by** comprising:
estimating water clogging in an anode side (S100, S200); and
maintaining, at a predetermined rate, a flow rate of an anode gas flowing in the anode side, and controlling a flow rate of a cathode gas flowing in a cathode side to be less than a predetermined rate, when it is estimated that the anode side is in a water clogging state (S104, S204).

6. The fuel cell system according to claim 5, **characterized in that**:
the water clogging is estimated based on a water content existing in the anode side; and
a case where it is estimated that the anode side is in a water clogging state indicates a case where the water content of the anode side is a threshold or more.
